Europäisches Patentamt

European Patent Office

Office européen des brevets

(11) Publication number: **0 227 293**
**A2**

(12) # EUROPEAN PATENT APPLICATION

(21) Application number: **86308939.7**

(22) Date of filing: **17.11.86**

(51) Int. Cl.⁴: **B 29 C 67/18**
**B 32 B 31/10**

(30) Priority: **05.12.85 US 804834**

(43) Date of publication of application:
**01.07.87 Bulletin 87/27**

(84) Designated Contracting States:
**CH DE FR GB IT LI NL**

(71) Applicant: **General Binding Corporation**
**One GBC Plaza**
**US-Northbrook, Illinois 60062(US)**

(72) Inventor: **Joson, Luis K.**
**4161 Touhy**
**Lincolnwood Illinois 60646(US)**

(74) Representative: **Oliver, Roy Edward et al,**
**POLLAK MERCER & TENCH High Holborn House 52-54**
**High Holborn**
**London WC1V 6RY(GB)**

(54) **Method for laminating.**

(57) A method for manufacturing an identification (ID) card or the like, in which the desired printed indicia for the card (20) are provided on a surface of a resin-coated photographic paper, which is then subjected to a corona discharge (21,22) and contacted with an adhesive-covered surface of a coated backing material (13;14) comprising a transparent resin backing (26;27) coated with a transparent heat-reactivatable resin adhesive (28;29), to form a laminate, the adhesive having a lower melting point than that of the backing, and finally applying heat and pressure (23) to the resulting laminate to bond the individual layers together into an integral whole (26-31).

FIG. 1

EP 0 227 293 A2

METHOD FOR LAMINATING                    **0227293**

DESCRIPTION

The present invention is in the field of laminating a photographic print to a transparent laminate in order to provide a monolithic laminate which is bonded sufficiently securely so as to be resistant to tampering.

The present invention represents an improvement in the laminating of photographic identification cards (ID cards) wherein the printed indicia, usually including a photograph, is included within typical pouches consisting of a pair of transparent film sheets, each of the film sheets being coated on one side with a transparent heat-reactivatable resin adhesive. In usual practice, a photograph bearing an image of the person to be identified and various indicia are placed within the pouch facing the adhesive surfaces. The pouch and its contents are then inserted into a laminating machine where heat and pressure are applied, melting the resin adhesive, and joining the film sheets at the edges and to each other and to the front and back of the photograph. Upon cooling, the assembly becomes essentially monolithic and ready for use by the person whose photograph appears on the card. The procedures and apparatus discussed herein are well known in the prior art and are described, for example, in United States Patent Nos. 3,623,933; 3,684,635; and 3,711,355, all of which are owned by the assignee of the present application, as well as in other patents.

The transparent, outer layer carrier sheet usually consists of polyethylene terephthalate or a polycarbonate film while the adhesive coating may consist of transparent adhesives having a lower melting point than the melting point of the outer carrier sheet. Such adhesives may be material such as low density polyethylene, ethylene vinyl acetate, ethylene ethyl acrylate, ethylene methyl acrylate or other resins having the required difference in melting point with respect to the outer film layer. Blends of such adhesives may also be used. The outer carrier layer supports the heat-reactivatable adhesive while the latter is subsequently heated to the melting point and adheres itself to an identifying photograph and related indicia as described above. Most heat-reactivatable adhesives are transparent, they resist many chemical agents, and are relatively inexpensive. These adhesives are substantially inert chemically and do not bond to other materials such as ink, adhesives, or to themselves. The same properties which make the resins so useful in laminating contribute to difficulties in printing and bonding. These difficulties have been generally overcome and it is now recognized that these materials can be bonded to one another and to other substances if their surfaces are oxidized.

Oxidation can be achieved in several ways, such as chemical priming, flame treatment, or by passing the material through a corona discharge field. The corona discharge treatment has evolved as the preferred method, particularly where it is important to control process variables at the lowest cost.

In commercial practice, where coated films are employed for ID cards and similar laminated materials, it is common practice to treat polyethylene terephthalate with a corona discharge immediately prior to application of a molten heat-reactivatable adhesive layer. It has also been observed that the adhesive side of the cooled, finished composite sheet will bond better to other materials, especially photographs, if that layer is itself corona discharge treated. Despite the improvement, corona treated film surfaces have a limited life at their optimum value when stored for prolonged periods of time in roll or stacked, sheet form. Corona discharge treatments provide no visible signs of their effects. Thus, it is not possible to tell whether or not a given film has actually been treated and, if so, to what degree and how uniformly. Laboratory tests can be used to determine the efficacy of the treatment, but these tests are of little value on the production floor. Another difficulty is the fact that the bond developed between the heat-reactivatable resin adhesives and various photographic print materials varies considerably. The amount of variation depends upon the age of the bond, its exposure to moisture, and the processing techniques employed in print development.

One of the most widely used photographic print materials is the Eastman Kodak Corporation's resin coated paper commonly known as RC paper. This material is particularly suitable because it dries quickly and is resistant to warpage. When the RC paper was first introduced a number of years ago, persons in the identification card field discovered that it was difficult to provide adequate interfacial bonds with the RC coated printing paper when this type of paper was used in the manufacture of ID cards.

The inability to bond the transparent films to the RC paper caused great difficulty to persons in the ID card business, especially those in military services where high security is required in the identifying component. This makes it essential that a good bond be achieved between the adhesive and the print paper so that the assembled components when bonded became essentially monolithic. Thus, if an attempt were made to alter the identifying photo or indicia, the separation of the adhesive layer from the photo print should result in self-destruction of the photo and/or indicia. Thus, the ID card with good internal bonding becomes difficult to copy, alter, or patch without reflecting the fact that an attempt has been made to tamper with the card's contents.

There are still practical problems in maintaining uniformly treated surfaces in storage of ID cards. Further, makers of ID cards demand still better and better bonds in order to obtain more secure ID cards with increased tamper-resistant properties.

The present invention involves manufacturing an ID card or the like by first providing a card with printed indicia, usually including a photograph, on a surface of a resin coated photographic paper. This photographic paper is subjected to a corona discharge and as soon as practical thereafter, the treated photographic paper is contacted with an adhesive covered surface of a coated backing material wherein the carrier consists of a transparent resin backing coated with a transparent heat-reactivatable resin adhesive having a melting point lower than that of the backing. The thus formed laminate is subjected to heat and pressure to bond the individual layers together into an integral whole.

In a preferred continuous form of the present invention, webs of a transparent resinous backing material having an adhesive coating formed thereon of a heat-reactivatable transparent resin adhesive are continuously passed from a supply of each web into the nip between a pair of heated pressure rollers with their adhesive coated surfaces facing each other. One of the webs prior to entering the nip is subjected to a corona discharge at its adhesive coated surface. Individual ID cards with the required indicia on them are passed with their resin coated surfaces in contact with the corona treated adhesive surface of one of the webs. The resulting laminate is then subjected to heat and pressure by means of the heated rolls to laminate the webs and the cards into an integral structure, followed by severing the web into individual laminated cards.

A further description of the present invention will be made in conjunction with the attached sheet of drawings in which:

FIG. 1 is a rather diagrammatic view of the method of the present invention applied on a continuous basis; and

FIG. 2 is a greatly enlarged cross-sectional view of the finished article showing the bonding between the resin coated photographic print paper and the adhesive coated carrier sheet.

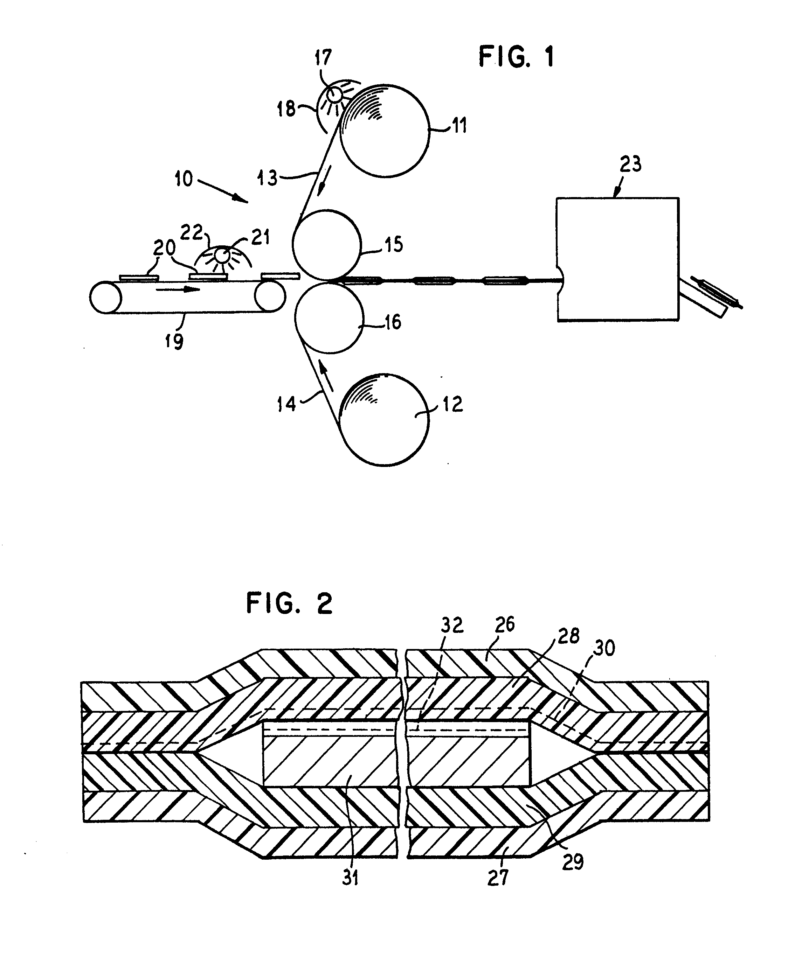

In FIG. 1, reference numeral 10 indicates generally a system for laminating ID cards although it will be recognized that the system described is applicable to laminating generally. Illustrated in FIG. 1 is a pair of film supply reels 11 and 12 from which webs 13 and 14 are continuously withdrawn. The webs 13 and 14 consist of a backing material composed of a transparent resin such as polyethylene terephthalate coated with a transparent, heat-reactivatable resin adhesive having a melting point lower than that of the backing. Suitable adhesive materials include ethylene vinyl acetate, low density polyethylene, and ethylene ethyl acrylate. In keeping with conventional practice, the surface of the polyethylene terephthalate may be pretreated with a corona discharge prior to applying the molten heat-reactivatable resin adhesive to it and cooling to form an adhesive coated web. The adhesive covered portion of the webs 13 and 14 meet at the nip between a pair of heated pressure rolls 15 and 16 which operate at a temperature sufficient to melt the heat-reactivatable adhesive without melting or distorting the outer carrier film of polyethylene terephthalate.

Shortly before the web 13 enters the nip between the rolls 15 and 16, it is subjected to a corona discharge as by means of a corona discharge rod 17 enclosed within a shield 18. Such corona discharge devices are well known in the art and their details do not form a part of the present invention.

There is also illustrated a conveyor 19 on which there is a series of cards 20 being delivered to the nip between the rolls 15 and 16. These cards are positioned face up with printed indicia, including a photograph, on their resin coated photographic print surfaces.

Immediately before entering the nip between the rolls 15 and 16, each of the cards 20 is subjected to a corona discharge by means of a second corona discharge rod 21 located beneath a shield 22. The corona discharge treatment on the cards 20 serves to activate the resin coated photographic print surface and make it amenable to bonding with the corona treated adhesive surface of the web 13. The two webs 13 and 14 and the cards 20 meet within the nip of the rolls and are laminated together, the cards being adhesively secured to the two webs, and the webs being secured to each other around the periphery of the cards. By using corona discharge treatment of the web and the cards, the bonding integrity is rendered at a maximum. This is especially true if the treatments are performed at the laminator, just before lamination. Thus, storage life of the treated article is no longer a factor. This improves the possiblility of obtaining optimum bonding between dissimilar films such as the resin coating on the photographic prints and heat-reactivatable adhesives on the carrier films.

After the two webs are laminated to the cards by heat and pressure applied at the rolls 15 and 16, the temperature usually being on the order of 200° to 300°F, the laminated web is slit into individual cards by means of a severing mechanism generally illustrated at reference numeral 23 in the drawings.

In FIG. 2, there is illustrated a greatly enlarged cross-sectional view of the improved ID cards of the present invention. The outside layers consist of transparent resin sheet material such as layers 26 and 27 composed of polyethylene terephthalate. Bonded to the layers 26 and 27 is a heat-reactivatable adhesive such as ethylene vinyl acetate, such layers being identified at reference numerals 28 and 29, respectively. The inner surface of the adhesive layer 28 has been pretreated by means of a corona discharge which modifies the surface characteristics of the adhesive layer 28, the depth of the treatment being schematically illustrated by a dash line 30.

Confined between the adhesive layers 28 and 29 is a card 31 having an upper surface composed of a resin coated (RC) photographic print paper which also has been corona discharge treated to a depth generally indicated by the dash line 32. As seen in FIG. 2, the adhesive layers 28 and 29 are bonded to each other on both sides of the card 31.

The best bond occurs at the interface between the corona discharge treated surface of the adhesive layer 28 because they consist of dissimilar materials which have been corona discharge treated. The next best bond is the interface between the corona discharge treated layer 28 and the nontreated layer 29 because these constitute similar materials in which one surface has been treated and the other is untreated.

The present invention thus provides an improved bond between the layered heat reactivatable adhesives and the print surfaces of an RC photographic print. Through the use of the present invention, the bonding integrity is maximized, particularly if the corona discharge treatments are performed at the laminator, just prior to lamination. The storage life of the treated materials is no longer a factor. This improves the probability of obtaining optimum bonding between dissimilar films such as the RC coatings on the prints and the heat-reactivatable adhesives on the carrier films.

It should be evident that various modifications can be made to the described embodiments without departing from the scope of the present invention.

CLAIMS:

1. A method of manufacture of an ID card or the like, which comprises providing printed indicia for the card upon a surface of a resin-coated photographic paper (20) and laminating the paper with a backing material (13;14), characterised in that

   (a) the photographic paper (20) bearing the printed indicia is subjected to a corona discharge (21,22),

   (b) the thus-treated photographic paper (20) is contacted with an adhesive-covered surface of the backing material (13;14), which comprises a transparent resin backing (26;27) coated with a transparent heat-reactivatable resin adhesive (28;29) having a melting point lower than that of the backing material, so as to form a laminate, and

   (c) heat and pressure are applied (23) to the resulting laminate to bond the individual layers into an integral whole (26-31).

2. A method according to claim 1, in which the resin backing (26;27) is selected from polyethylene terephthalate and polycarbonate.

3. A method according to claim 1 or 2, in which the adhesive (28;29) is selected from ethylene/vinyl-acetate, low-density polyethylene and ethylene/ethyl-acrylate.

4. A method according to any preceding claim, in which a corona discharge (17,18) is applied to the adhesive-covered surface of the coated backing material (13;14) prior to contacting it with the surface of the photographic paper (20).

5. A method of manufacture of an ID card or the like, which comprises continuously passing webs (13,14) from a supply (11,12) of such webs, each composed of a transparent resinous backing material (26,27) having an adhesive coating (28,29), into the nip between a pair of heated pressure rollers (15,16), with their adhesive-coated surfaces facing each other, and introducing through the nip between the webs (13,14) a plurality of individual cards (20), each having indicia thereon formed on a surface of a resin-coated photograhic paper, characterised in that

(a) the adhesive coatings (28,29) on the webs of backing material (26,27) are formed of a heat-reactivatable transparent resin adhesive (28,29) having a melting point lower than that of the backing material (26,27),

(b) one of the webs (13,14) is subjected to a corona discharge (17,18) at its adhesive-coated surface immediately before passing into the nip,

(c) the surface of the resin-coated photographic paper of each card (20) is subjected to a corona discharge (21,22),

(d) the thus-treated paper cards (20) are introduced through the nip with their corona-treated surfaces  contacting the corona-treated surface of one of the webs (13,14),

(e) sufficient heat and pressure are applied at the pressure rollers (15,16) to laminate the webs (13,14) and the cards (20) into an integral whole (26-31), and

(f) the resultant integral web is severed into individual laminated cards.

6. A method according to claim 5, wherein the resinous backing material (26,27) is polyethylene terephthalate.

7. A method according to claim 5 or 6, wherein the adhesive is selected from ethylene/vinyl-acetate, low-density polyethylene, ethylene/ethyl-acrylate and ethylene/methyl-acrylate.

8.	A method according to any preceding claim, wherein the adhesive coating (28,29) includes a blend of heat-reactivatable resins.

1/1

0227293

FIG. 1

FIG. 2